# EUROPEAN PATENT SPECIFICATION

(11) **EP 2 843 527 B1**
(45) Date of publication and mention of the grant of the patent: **04.11.2020**
(21) Application number: 14182473.0
(22) Date of filing: 27.08.2014
(51) Int. Cl.: G06F 3/0483, G06F 3/0485, G06F 3/0488

(54) **Mobile terminal supporting note function and method for controlling the mobile terminal**
Mobiles Endgerät mit Unterstützung einer Notizfunktion und Verfahren zur Steuerung des mobilen Endgeräts
Terminal mobile supportant une fonction de note et procédé de commande du terminal mobile

(30) Priority: 27.08.2013 KR 20130101904
(43) Date of publication of application: 04.03.2015
(73) Proprietor: Samsung Electronics Co., Ltd., Gyeonggi-do 443-742 (KR)
(72) Inventor: Lee, Ho-Young, 443-742 Gyeonggi-do (KR); Kwon, Yang-Hee, 443-742 Gyeonggi-do (KR); Jang, Chul-Ho, 443-742 Gyeonggi-do (KR); Cho, Min-Kyung, 443-742 Gyeonggi-do (KR)
(74) Representative: Nederlandsch Octrooibureau

(56) References cited:
- US-A- 5 751 287
- US-A1- 2010 182 246
- US-A1- 2012 198 384
- US-A1- 2013 021 281

## Description

### TECHNICAL FIELD

The present disclosure relates to a mobile terminal supporting a note function and a method for controlling the mobile terminal. More particularly, the present disclosure relates to a mobile terminal supporting a note function, which provides an execution screen having various designs and operations based on a user's preference to allow a user to conveniently execute the note function.

### BACKGROUND

With the development of digital technologies, users take a memo in various ways by using various digital devices. For example, a user may write a word or draw a picture with a wireless pen mouse to let the word or picture be displayed on a desktop computer or a laptop computer connected with the wireless pen mouse. The user may also take a memo directly on a mobile terminal or a tablet Personal Computer (PC) having a touch screen mounted thereon by using a touch pen. More particularly, a mobile terminal allows the user to quickly and conveniently take a memo and store the memo whenever the user wants, by providing a memo function. Recently, such a memo function has been further developed, and thus some mobile terminals provide users with a memo function in the form of a note that compiles several memos.

The above information is presented as background information only to assist with an understanding of the present disclosure. No determination has been made, and no assertion is made, as to whether any of the above might be applicable as prior art with regard to the present disclosure.

US 2010/182246 relates to a touch sensitive computing system and method for displaying aging characteristics for a plurality of journal pages.

US 2013/021281 relates to an interactive input system that includes a touch panel; and processing structure displaying on the touch panel at least one graphic object depicting a book having one or more page stacks. The processing structure displays each page stack of the book graphic object with a respective width that is based on a number of pages in the page stack. A method for manipulating a book object, and computer program embodied by a computer readable medium are also disclosed.

US 5751287 relates to a user interface for providing a cabinet, drawers, folders and documents for manipulating and organizing the documents. An image of a file cabinet is used where the user can create, name, describe, lock and position the drawer within a space in the file cabinet. Each drawer can be marked with a graphic icon for easier visual identification.

### SUMMARY

However, an execution screen for providing a note function of a mobile terminal to a user does not have various designs and operations and even ignores the preference of the user who executes the note function.

Therefore, a need exists for a mobile terminal supporting a note function, which provides an execution screen having various designs and operations based on a user's preference to allow a user to conveniently execute the note function, and a method for controlling the mobile terminal.

Aspects of the present disclosure are to address at least the above-mentioned problems and/or disadvantages and to provide at least the advantages described below. Accordingly, an aspect of the present disclosure is to provide a mobile terminal supporting a note function, which provides an execution screen having various designs and operations based on a user's preference to allow a user to conveniently execute the note function, and a method for controlling the mobile terminal.

In accordance with an aspect of the present disclosure, a method for controlling a mobile terminal according to claim 1 is provided.

In accordance with another aspect of the present disclosure, a mobile terminal supporting a note function according to claim 15 is provided.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram illustrating a mobile terminal according to an embodiment of the present disclosure;
FIG. 2 is a front perspective view illustrating a mobile terminal according to an embodiment of the present disclosure;
FIG. 3 is a rear perspective view illustrating a mobile terminal according to an embodiment of the present disclosure;
FIG. 4A is a flowchart illustrating a method for operating a mobile terminal according to an embodiment of the present disclosure;
FIG. 4B is a flowchart illustrating a method for operating a mobile terminal according to an embodiment of the present disclosure;
FIGS. 5A, 5B, and 5C illustrate a mobile terminal executing a note function according to an embodiment of the present disclosure;
FIGS. 6A, 6B, and 6C illustrate a mobile terminal executing a note function according to an embodiment of the present disclosure;
FIGS. 7A and 7B illustrate a mobile terminal executing a note function according to an embodiment of the present disclosure;
FIGS. 8A, 8B, and 8C illustrate a mobile terminal executing a note function according to an embodiment of the present disclosure;
FIGS. 9A, 9B and 9C illustrate a mobile terminal executing a note function according to an embodiment of the present disclosure;
FIGS. 10A, 10B, 10C, and 10D illustrate a mobile terminal executing a note function according to an embodiment of the present disclosure;
FIGS. 11A, 11B, and 11C illustrate a mobile terminal executing a note function according to an embodiment of the present disclosure;
FIGS. 12A, 12B, 12C, and 12D illustrate a mobile terminal executing a note function according to an embodiment of the present disclosure;
FIGS. 13A, 13B, 13C, 13D, and 13E illustrate a mobile terminal executing a note function according to an embodiment of the present disclosure; and
FIGS. 14A, 14B, 14C, and 14D illustrate a mobile terminal executing a note function according to an embodiment of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to skill in the art, may occur in amounts that do not preclude the effect the characteristic was intended to provide.

Although ordinal numbers, such as "first," "second," and so forth will be used to describe various components, those components are not limited herein. The terms are used for distinguishing one component from another component. For example, a first component may be referred to as a second component and similarly, a second component may also be referred to as a first component, without departing from the teaching of the inventive concept. The term "and/or"used herein includes any and all combinations of one or more of the associated listed items.

The terminology used herein is for the purpose of describing embodiments and is not intended to be limiting. As used herein, the singular forms are intended to include the plural forms as well, unless the context clearly indicates otherwise. It will be further understood that the terms "comprises" and/or "has," when used in this specification, specify the presence of a stated feature, number, step, operation, component, element, or combination thereof, but do not preclude the presence or addition of one or more other features, numbers, steps, operations, components, elements, or combinations thereof.

The terms used herein, including technical and scientific terms, have the same meanings as terms that are generally understood by those skilled in the art, as long as the terms are not differently defined. It should be understood that terms defined in a generally-used dictionary have meanings coinciding with those of terms in the related technology.

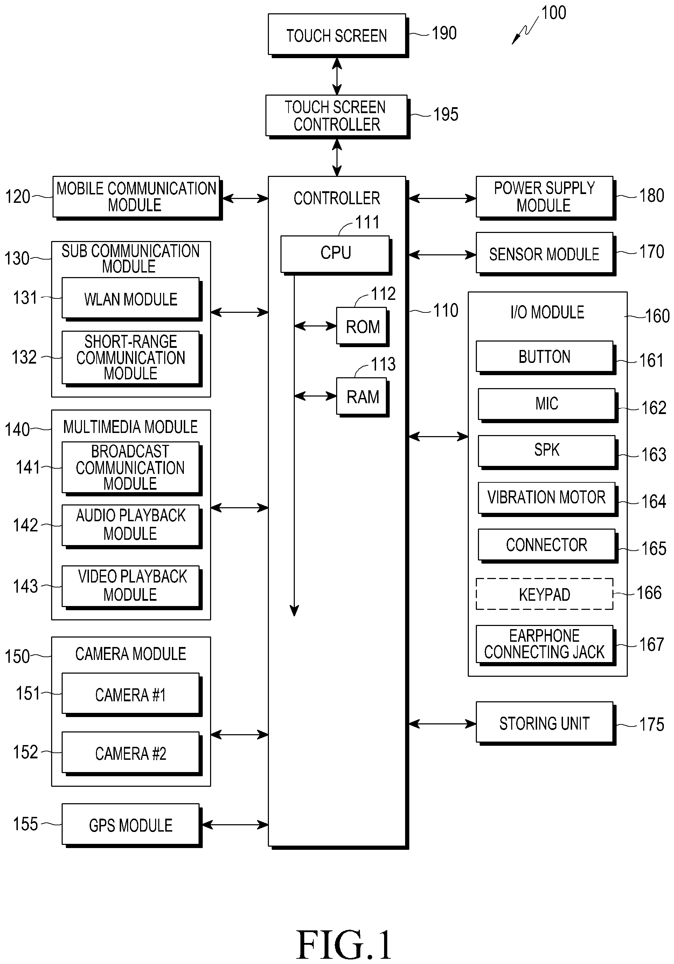

FIG. 1 is a block diagram illustrating a mobile terminal according to an embodiment of the present disclosure.
Referring to FIG. 1, a mobile terminal 100 may include a controller 110, a storing unit 175, and a screen 190. The mobile terminal 100 may further include at least one of a mobile communication module 120, a sub communication module 130, a multimedia module 140, a camera module 150, an input/output module 160, a sensor module 170, a power supply unit 180, and a screen controller 195.

The controller 110 may include a Read Only Memory (ROM) 112 in which a control program for controlling the mobile terminal 100 is stored, and a Random Access Memory (RAM) 113 which memorizes a signal or data input from the mobile terminal 100 or is used as a memory region for a task performed in the mobile terminal 100. A Central Processing Unit (CPU) 111 may include a single core, a dual core, a triple core, or a quad core processor. The CPU 111, the ROM 112, and the RAM 113 may be interconnected through an internal bus.

The controller 110 controls the mobile communication module 120, the sub communication module 130, the multimedia module 140, the camera module 150, the input/output module 160, a Global Positioning System (GPS) module 155, the sensor module 170, the storing unit 175, the power supply unit 180, the screen 190, and the screen controller 195.

The controller 110 controls various contents displayed through the screen 190 or controls displaying of the contents by controlling the screen 190. The controller 110 controls the mobile terminal 100 to perform an operation corresponding to a touch input detected through the screen 190, that is, an operation corresponding to a user input. Upon inputting of a touch input of touching at least one point through the screen 190, the controller 110 controls the mobile terminal 100 to perform an operation corresponding to the touch input.

According to an embodiment of the present disclosure, the controller 110 controls the mobile terminal 100 to execute the note function. Upon inputting of a user input for executing the note function through the input/output module 160 or the screen 190, the controller 110 controls the screen 190 to display an execution screen on which the note function is executed. The controller 110 also controls the mobile terminal 100 to perform an operation corresponding to the user input inputted through the input/output module 160 or the screen 190 during execution of the note function.

In the current embodiment of the present disclosure, the note function for recording and storing at least one memo may be implemented in the form of software or an application stored in the storing unit 175 and may be executed by the controller 110. For example, the user may select an application that implements the note function from among applications stored in the storing unit 175 of the mobile terminal 100 to execute the note function in the mobile terminal 100.

The controller 110 may control the screen 190 to display notes, stored in advance in the storing unit 175, based on attributes of the respective notes, upon execution of the note function in the mobile terminal 100. The controller 110 may control the screen 190 to display the notes differently depending on a time having elapsed after creation of each note. For example, the controller 110 may control the screen 190 in such a way that a note having a longer elapsed time after creation has an older feeling.

The controller 110 also controls the screen 190 to display the notes differently depending on a cover attribute of each note. For example, the controller 110 may control the screen 190 to display the notes differently for leather, soft, and hard covers of the notes. According to an embodiment, the controller 110 may control the screen 190 to differently display the covers of the notes depending on a security level of each note. For example, the controller 110 may control the screen 190 to display a larger-size lock for a note having a higher security level and display a smaller-size lock for a note having a lower security level. According to another embodiment, the degree of transformation of objects (for example, a lock, and the like) included in each note may vary with a security level of the note. For example, suppose that a lock indicating that a note is protected is provided on a cover of the note and that the user inputs a user input for selecting the protected note to the mobile terminal 100. In the current embodiment, the controller 110 may control the screen 190 to display a larger motion of the lock for a higher security level of the note. For example, a lock provided on a cover of a note sways 150° to the left and to the right for a high security level, 100° to the left and to the right for an intermediate security level, and 50° to the left and to the right for a low security level.

According to an embodiment of the present disclosure, the controller 110 controls the screen 190 to arrange and display the notes in line horizontally depending on attributes (for example, a cover attribute, an elapsed time after creation, a security level, and the like) of each note. Upon inputting of a user input for horizontally scrolling the notes through the screen 190, the controller 110 controls the screen 190 to move and display the notes from the left to the right or from the right to the left, based on attributes of each note and an order the notes are arranged. According to another embodiment, the controller 110 controls the screen 190 to arrange and display the notes in line vertically. Upon inputting of a user input for vertically scrolling the notes through the screen 190, the controller 110 controls the screen 190 to move and display the notes from top to bottom or from bottom to top, based on attributes of each note and an arranging order of the notes.

According to an embodiment of the present disclosure, once receiving, from the user, a touch input of selecting one of the horizontally arranged notes and dragging down the selected note through the screen 190, the controller 110 may regard the touch input as a user input for selecting one of the horizontally arranged notes.

According to an embodiment of the present disclosure, the controller 110 controls the screen 190 to arrange and display the notes horizontally and display at least some sheets of each note in one of an upper portion, a lower portion, a left portion, and a right portion of the note. For example, the screen 190 may display, together with the horizontally arranged notes, some sheets of each note in an upper portion of the note. According to an embodiment of the present disclosure, the controller 110 controls the screen 190 to display sheets of a note selected by the user in one of the upper portion, the lower portion, the left portion, and the right portion of the note. Similar to the covers of the notes, the sheets may also be displayed differently depending on an elapsed time after creation of each sheet or attributes of each sheet.

According to an embodiment of the present disclosure, the controller 110 controls the screen 190 to display the note selected by the user by applying a different time for opening a cover of the selected note, depending on a material of the cover of the selected note or the number of sheets included in the selected note. For example, for a note including a larger number of sheets, a longer time may be needed to open a cover of the note, and for a note including a smaller number of sheets, a shorter time may be needed to open a cover of the note. In addition, for a heavier material of a cover, a longer time may be needed to open the cover.

As such, the controller 110 defines attributes of each note. By defining the attributes of each note, the controller 110 controls the screen 190 to display each note depending on the attributes of the note. If a note is selected by a user input, the controller 110 also controls the screen 190 to transform and display the selected note depending on attributes of the note and the user input. The controller 110 also defines attributes of each sheet of a note to display the sheet depending on the defined attributes of the sheet. If a user input is inputted for each sheet, the controller 110 controls the screen 190 to transform and display each sheet depending on the attributes of the sheet and the user input.

The mobile communication module 120 may facilitate the connection between the mobile terminal 100 and an external device by using one or more antennas (not illustrated) under control of the controller 110. The mobile terminal 100 and the external device may be connected through mobile communication. The mobile communication module 120 transmits/receives a wireless signal for a voice call, a video call, a text message based on a Short Messaging Service (SMS), and/or a multimedia message based on a Multi Media Service (MMS) with a cellular phone (not illustrated), a smart phone (not illustrated), a tablet PC, or another electronic device (not illustrated) which has a phone number input into the mobile terminal 100.

The input/output module 160 may include at least one of a plurality of buttons 161, a microphone 162, a speaker 163, a vibration motor 164, a connector 165, and a keypad 166. The input/output module 160 receives a user input for executing a note function from the user. The input/output module 160 may also receive a user input for executing a user-desired operation during execution of the note function.

The buttons 161 may be formed on at least one of a front surface, a side surface, and a rear surface of a housing of the mobile terminal 100, and may include at least one of a power/lock button (not illustrated), a volume button (not illustrated), a menu button, a home button, a back button, and a search button.

The microphone 162 receives voice or sound and generates a corresponding electric signal under control of the controller 110.

The speaker 163 outputs sound corresponding to various signals (for example, wireless data, broadcast data, digital audio data, digital video data, or the like) of the mobile communication module 120, the sub communication module 130, the multimedia module 140, or the camera module 150 under control of the controller 110. The speaker 163 may output sound corresponding to a function executed by the mobile terminal 100 (for example, button manipulation sound corresponding to a phone call, a ring back tone, or the like). One or more speakers 163 may be formed in a proper position or proper positions of the housing of the mobile terminal 100.

The vibration element 164 converts an electric signal into mechanical vibration under control of the controller 110. For example, in the mobile terminal 100, in a vibration mode, if a voice call or a video call from another device (not illustrated) is received, the vibration element 164 operates. One or more of the vibration element 164 may be disposed in the housing of the mobile terminal 100. The vibration element 164 may operate in response to a user touch of touching the screen 190 and a continuous movement of a touch on the screen 190.

The connector 165 may be used as an interface for connecting the mobile terminal 100 with an external device (not illustrated) or a power source (not illustrated). Under control of the controller 110, data stored in the storing unit 175 of the mobile terminal 100 may be transmitted to an external electronic device or data may be received from the external electronic device through a wired cable connected to the connector 165. The mobile terminal 100 receives power from the power source (not illustrated) through the wired cable connected to the connector 165 or may charge a battery (not illustrated) by using the power source

The keypad 166 receives key input from the user for control of the mobile terminal 100. The keypad 166 includes a physical keypad (not illustrated) formed in the mobile terminal 100 or a virtual keypad (not illustrated) displayed on the screen 190. The physical keypad (not illustrated) formed in the mobile terminal 100 may be excluded according to the capability or structure of the mobile terminal 100.

An earphone (not illustrated) may be inserted into an earphone connecting jack 167 to be connected to the mobile terminal 100.

The storing unit 175 stores a signal or data which is input/output corresponding to operations of the mobile communication module 120, the sub communication module 130, the multimedia module 140, the camera module 150, the GPS module 155, the input/output module 160, the sensor module 170, or the screen 190, under control of the controller 110. The storing unit 175 may also store a control program and applications for control of the mobile terminal 100 and/or the controller 110.

The storing unit 175 stores data for executing the note function. The storing unit 175 stores data, such as a text, an image, voice, video, and the like, recorded on a note by the user during execution of the note function. The storing unit 175 stores at least one note and sheets included in each note. The storing unit 175 may also store a note or sheets updated by a user input.

The term "storing unit" includes the storing unit 175, the ROM 112 and the RAM 113 in the controller 110, or a memory card (not illustrated) mounted in the terminal 100 (for example, a Secure Digital (SD) card, a memory stick). The storing unit 175 may include a non-volatile memory, a volatile memory, a Hard Disk Drive (HDD), 0or a Solid State Drive (SSD).

The screen 190 displays data stored in the mobile terminal 100. The screen 190 may display an execution screen on which the note function is executed, on a real time basis, and may also receive a user input from the user during execution of the note function.

According to an embodiment, the screen 190 may be implemented in the form of a touch screen to receive, from the user, a user input (touch input) generated when the user contacts the screen 190 with a user's body part (for example, a finger). The screen 190 may also provide a user interface corresponding to various services (for example, call, data transmission, broadcasting, picture taking, and the like) to users. The screen 190 outputs an analog signal, which corresponds to at least one touch input to the user interface, to the screen controller 195. The screen 190 receives at least one user input through a user's body (for example, a finger including a thumb) or a touch input unit (for example, a stylus pen). The screen 190 also receives a continuous movement of one touch among the at least one touch. The screen 190 outputs an analog signal corresponding to the received continuous movement of the touch to the screen controller 195.

In embodiments of the present disclosure, a touch may also include a non-contact touch (for example, when the user's body or the touch input unit is positioned within a distance of, for example, 1 mm from the screen 190) as well as a direct contact between the user's body or the touch input unit and the screen 190. A distance or interval from the screen 190 within which the user's body or the touch input unit may be detected may be changed according to the capability or structure of the portable terminal 100.

The touch screen 190 may be implemented as, for example, a resistive type, a capacitive type, an infrared type, or an acoustic wave type. According to an embodiment, the screen 190 may be implemented to include a touch recognition unit (not illustrated) of an Electromagnetic Resonance (EMR) type, thus easily receiving a user input inputted by, for example, a stylus pen.

The sub communication module 130 includes at least one of a Wireless Local Area Network (WLAN) module 131 and a short-range communication module 132. For example, the sub communication module 130 may include either the WLAN module 131 or the short-range communication module 132, or both of them.

The WLAN module 131 may be connected to the Internet in a place where a wireless Access Point (AP) (not illustrated) is installed, under control of the controller 110. The WLAN module 131 supports the wireless LAN standard IEEE802.11x of the Institute of Electrical and Electronics Engineers (IEEE). The short-range communication module 132 may wirelessly perform short-range communication between the mobile terminal 100 and an image forming apparatus (not illustrated) under control of the controller 110. The short-range communication may include Bluetooth, Infrared Data Association (IrDA), WiFi-Direct communication, NFC communication, or the like.

The mobile terminal 100 may include at least one of the mobile communication module 120, the WLAN module 131, and the short-range communication module 132, depending on its capability. For example, the mobile terminal 100, depending on its capability, may include a combination of the mobile communication module 120, the WLAN module 131, and the short-range communication module 132.

The multimedia module 140 may include a broadcast communication module 141, an audio playback module 142 or a video playback module 143. The broadcast communication module 141 receives a broadcast signal (for example, a TV broadcast signal, a radio broadcast signal, or a data broadcast signal) and broadcast additional information (for example, Electric Program Guide (EPG) or Electric Service Guide (ESG)) transmitted from a broadcasting station (not shown) via a broadcast communication antenna (not illustrated) under control of the controller 110. According to an embodiment, the broadcast communication module 141 may output content data received through the mobile communication module 120 to the screen 190. The audio playback module 142 may play a digital audio file (for example, a file having a file extension, such as 'mp3', 'wma', 'ogg', 'wav', and the like) stored or received under control of the controller 110. The video playback module 143 may play a digital video file (for example, a file having a file extension, such as 'mpeg', 'mpg', 'mp4', 'avi', 'mov', 'mkv', and the like) stored or received under control of the controller 110. The video playback module 143 may play a digital audio file.

The multimedia module 140 may include the audio playback module 142 and the video playback module 143, except for the broadcast communication module 141. The audio playback module 142 or the video playback module 143 of the multimedia module 140 may be included in the controller 110.

The camera module 150 may include at least one of a first camera 151 and a second camera 152 which capture a still image or a video under control of the controller 110. The first camera 151 or the second camera 152 may include an auxiliary light source (for example, a flash that is not illustrated) for providing the amount of light needed for photographing. The first camera 151 may be positioned on the front surface of the mobile terminal 100, and the second camera 152 may be positioned on the rear surface of the mobile terminal 100. In another embodiment, the first camera 151 and the second camera 152 may be positioned adjacent to each other (for example, a space between the first camera 151 and the second camera 152 is greater than 1 cm and less than 8 cm) to capture a three-dimensional (3D) still image or a 3D moving image.

The GPS module 155 receives electric waves from a plurality of GPS satellites (not illustrated) that orbit the Earth and calculates a position of the mobile terminal 100 using time of arrival from the GPS satellite (not illustrated) to the mobile terminal 100.

The sensor module 170 includes at least one sensor for detecting a state (i.e., position, direction, movement, and the like) of the mobile terminal 100. For example, the sensor module 170 may include at least one of a proximity sensor for detecting the user's proximity with respect to the mobile terminal 100, an illumination sensor (not illustrated) for detecting an amount of light around the mobile terminal 100, a motion sensor (not illustrated) for detecting an operation of the mobile terminal 100 (for example, rotation, acceleration, deceleration, or vibration of the mobile terminal 100), a geo-magnetic sensor (not illustrated) for detecting a point of the compass by using the Earth's magnetic field, a gravity sensor for detecting a working direction of the gravity, an altimeter for measuring an atmospheric pressure to detect an altitude, and the like. The sensor module 170 detects a state of the mobile terminal 100 and generates a signal corresponding to the detection to output the signal to the controller 110. The sensor of the sensor module 170 may be added or removed depending on the capability of the mobile terminal 100.

The sensor module 170 may include a proximity sensor that detects user's motion (for example, motion of a finger of a user) detected in a range that is proximate to the screen 190. For example, if the screen 190 is implemented as a capacitive type, the sensor module 170 implemented with a proximity sensor may detect a user's motion by detecting a capacitance change occurring in a range of the screen 190 (for example, at a height of 10 cm from the screen 190). The detected user's motion may also be included in a user input.

The power supply unit 180 supplies power to one or more batteries disposed in a housing of the mobile terminal 100 under control of the controller 110. The one or more batteries supply power to the mobile terminal 100. The power supply unit 180 may also supply power input from an external power source through the wired cable connected with the connector 165 to the mobile terminal 100. The power supply unit 180 may also supply power, which is wirelessly input from an external power source using a wireless charging technique, to the mobile terminal 100.

The screen controller 195 converts the analog signal received from the screen 190 into a digital signal and transmits the digital signal to the controller 110. The controller 110 controls the screen 190 by using the digital signal received from the screen controller 195. For example, the controller 110 may control a shortcut icon (not illustrated) displayed on the screen 190 to be selected or executed in response to a direct touch event or a hovering event. The screen controller 195 may be included in the controller 110.

According to an embodiment of the present disclosure, the screen controller 195 may extract coordinates on the screen 190, which correspond to a proximity detecting input detected by the sensor module 170. For example, suppose that a proximity detecting input for selecting a point (a first point) in a range proximate to the screen 190 is detected through the sensor module 170. In addition, suppose that proximity detecting is implemented as a capacitive type. The sensor module 170 detects a capacitance change occurring in a range of the screen 190, and the controller 110 controls the screen controller 195 to extract coordinates of a point (a second point) on the screen 190, which corresponds to a point (a first point) at which the capacitance change occurs. For example, the second point may be a point on the screen 190, which is closest to the first point.

According to an embodiment of the present disclosure, the mobile terminal 100 may be connected with an external electronic device (not illustrated) by using at least one of the sub communication module 130, the connector 165, and the earphone connecting jack 167.

The "external device" may include various which are removable from the portable terminal 100 and are connectible with the portable terminal 100 in a wired manner, such as an earphone, an external speaker, a Universal Serial Bus (USB) memory, a charging device, a cradle/dock, a Digital Multimedia Broadcasting (DMB) antenna, a mobile payment-related device, a health management device (i.e., a blood pressure monitor, or the like), a game console, a vehicle navigation device, and the like. The "external device" may also include a wirelessly connectible Bluetooth communication device, a Near Field Communication (NFC) device, a WiFi Direct communication device, and a wireless Access Point (AP). The "external device" may also include other devices, such as a cellular phone, a smart phone, a tablet Personal Computer (PC), a desktop PC, a server, and the like.

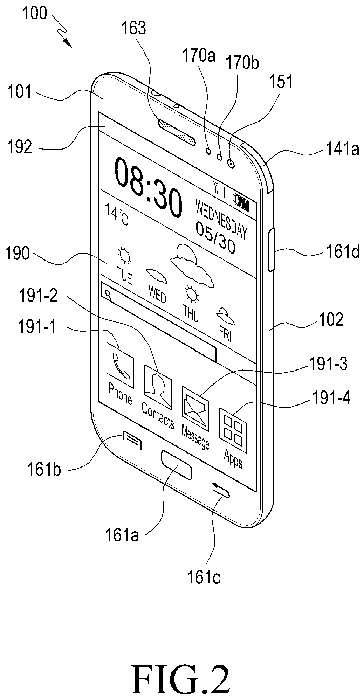

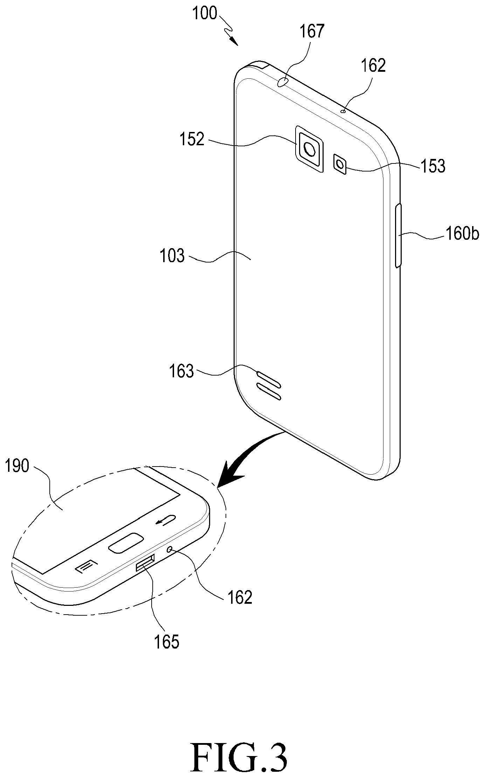

FIG. 2 is a front perspective view of a mobile terminal according to an embodiment of the present disclosure, and FIG. 3 is a rear perspective view of a mobile terminal according to an embodiment of the present disclosure.

Referring to FIGS. 2 and 3, the screen 190 is disposed in the center of a front surface 101 of the mobile terminal 100. The screen 190 may be large enough to occupy most of the front surface 101 of the portable terminal 100.

FIG. 2 shows an example in which a main home screen is displayed on the screen 190. The main home screen is an initial screen displayed on the screen 190 when the portable terminal 100 is powered on. When the portable terminal 100 has different home screens of several pages, the main home screen may be the first home screen among the home screens of the several pages. Shortcut icons 191-1, 191-2, and 191-3 for executing frequently used applications, a main menu change key 191-4, time, weather, and the like may be displayed on the home screen. If the user selects the main menu change key 191-4, a menu screen is displayed on the screen 190. A status bar 192 indicating a state of the portable terminal 100, such as a battery charge state, a strength of a received signal, a current time, and the like, may be formed in an upper portion of the screen 190.

In a lower portion of the screen 190, a home button 161a, a menu button 161b, and a back button 161c may be disposed. The home button 161a is intended to display the main home screen on the screen 190. For example, when any home screen, which is different from the main home screen, or a menu screen is displayed on the screen 190, the main home screen may be displayed on the screen 190 upon selection of the home button 161a. If the home button 161a is selected during execution of applications on the screen 190, the main home screen illustrated in FIG. 2 may be displayed on the screen 190. The home button 161a may be used to display recently used applications or a task manager on the screen 190.

The menu button 161b provides a connection menu which may be displayed on the screen 190. The connection menu may include, for example, a widget add menu, a background change menu, a search menu, an edit menu, an environment setting menu, and the like.

The back button 161c may be used to display a screen which was displayed immediately before the currently executed screen or to terminate the most recently used application.

The first camera 151, an illumination sensor 170a, and a proximity sensor 170b may be disposed on an edge of the front surface 101 of the mobile terminal 100. The second camera 152, the flash 153, and the speaker 163 may be disposed on a rear surface 103 of the mobile terminal 100.

A power/reset button 161d, a volume button 160b, a terrestrial DMB antenna 141a for broadcasting reception, and one or more microphones 162 may be disposed on a lateral surface 102 of the mobile terminal 100. The DMB antenna 141a may be fixed to or removable from the mobile terminal 100.

The connector 165, in which multiple electrodes are formed and may be connected with an external device in a wired manner, may be formed in a lower-end lateral surface of the mobile terminal 100. The earphone connecting jack 167, into which the earphone may be inserted, may be formed in an upper-end lateral surface of the mobile terminal 100.

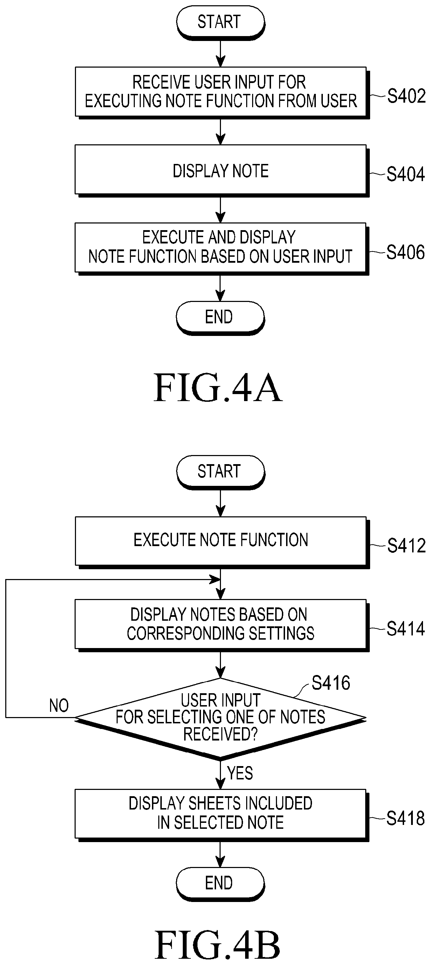

FIG. 4A is a flowchart illustrating a method for operating a mobile terminal according to an embodiment of the present disclosure.

Referring to FIG. 4A, the mobile terminal 100 receives a user input for executing a note function from a user in operation S402. According to an embodiment, the user may input a user input of selecting an application implemented to execute the note function from among applications stored in the storing unit 175, thus inputting the user input for executing the note function to the mobile terminal 100.

Once the user input for executing the note function is input, the controller 110 controls the mobile terminal 100 to execute the note function and display a note in operation S404. According to an embodiment of the present disclosure, the controller 110 displays the note by executing the application implemented to execute the note function and displaying the application on the screen 190. When the note is displayed, the user may record desired data for addition or modification or may delete existing data. The controller 110 executes the note function and displays the note function on the screen 190 in real time based on the user input in operation S406.

FIG. 4B is a flowchart illustrating a method for operating a mobile terminal according to an embodiment of the present disclosure.

Referring to FIG. 4B, if the note function is executed in operation S412, the screen 190 of the mobile terminal 100 displays notes depending on attributes of each note under control of the controller 110 in operation S414. For example, it is assumed that first through third notes are displayed on the screen 190 in operation S414. In addition, suppose that an attribute of the first note is a leather cover, an attribute of the second note is a soft cover, and an attribute of the third note is a hard cover. In operation S412, the controller 110 controls the screen 190 to display the first through third notes in such a way that the user may see a material of the cover of each of the first through third notes. The attributes of each note may include a material of the cover, a color of the cover, a font of a title on the cover, a font size of the title on the cover, a material of a sheet, a color of the sheet, a font on the sheet, a font size on the sheet, and the like.

According to an embodiment of the present disclosure, prior to operation S412, the mobile terminal 100 may receive the user input for executing the note function from the user. According to an embodiment of the present disclosure, the user inputs a user input of selecting the application (note application) implemented to execute the note function from among the applications stored in the storing unit 175 of the mobile terminal 100, thus inputting the user input for executing the note function to the mobile terminal 100.

The controller 110 determines whether a user input for selecting one of the displayed notes is received in operation S416. If the controller 110 determines that the user input is not received in operation S416 ('No'), the screen 190 continues displaying the notes depending on the attributes of the respective notes, under control of the controller 110 in operation S414.

If the controller 110 determines that the user input is received in operation S416 ('Yes'), the screen 190 displays sheets included in the selected note under control of the controller 110 in operation S418.

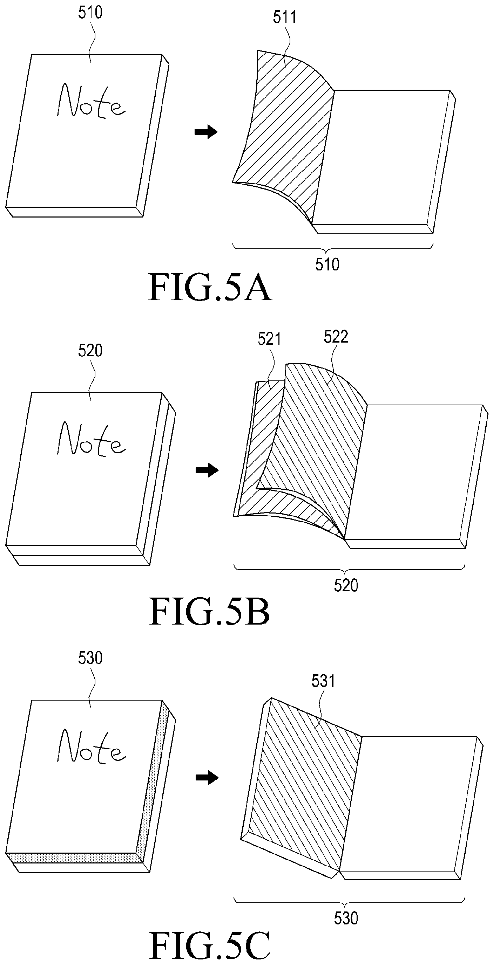

FIGS. 5A, 5B, and 5C illustrate a mobile terminal executing a note function according to an embodiment of the present disclosure.

Referring to FIGS. 5A, 5B, and 5C, it is illustrated that first, second, and third notes 510, 520, and 530 are thicker in that order. For example, the first note 510 illustrated in FIG. 5A has the smallest thickness, the third note 530 illustrated in FIG. 5C has the largest thickness, and the second note 520 illustrated in FIG. 5B has a thickness larger than the thickness of the first note 510 and smaller than the thickness of the third note 530.

Once the note function is executed, the screen 190 displays the first, second, and third notes 510, 520, and 530, as illustrated in FIGS. 5A, 5B, and 5C under control of the controller 110. The screen 190 may also receive a user input for turning over a cover or a sheet of each of the first through third notes 510, 520, and 530 from the user.

Referring to FIG. 5A, the mobile terminal 100 first displays the first note 510 having a small thickness and receives a user input for turning over a cover 511 of the first note 510 through the screen 190. The mobile terminal 100 performs and displays an action of turning the cover 511 of the first note 510 on the screen 190. The cover 511 of the first note 510 is assumed to have a small thickness (of, for example, 1 mm or less). When executing and displaying the action of turning the cover 511 of the first note 510 on the screen 190, the controller 110 may give the user an impression that the thin cover 511 is lightly turned over. For example, under control of the controller 110, the screen 190 may perform a display operation as if the cover 511 of the first note 510 is turned over in a fluttering manner.

Referring to FIG. 5B, the mobile terminal 100 first displays the second note 520 having an intermediate thickness, which is thicker than the first note 510 and thinner than the third note 530, and receives a user input for turning a cover 521 or a sheet 522 of the second note 520 through the screen 190. The mobile terminal 100 performs and displays an action of turning the cover 521 of the second note 520 on the screen 190. The cover 521 of the second note 520 has an intermediate thickness (of, for example, about 1 - 2 mm), and thus is thicker than the cover 511 of the first note 510 and is thinner than a cover 531 of the third note 530. When performing and displaying the action of turning the cover 521 of the second note 520 on the screen 190, the controller 110 may give the user an impression that the cover 521 is turned over more heavily than the cover 511 of the first note 510. According to an embodiment of the present disclosure, the sheet 522 of the second note 520 is assumed to be thinner (to have a thickness of, for example, about 1 mm or less) than the cover 521 of the second note 520. Thus, when performing and displaying the action of turning the sheet 522 of the second note 520 on the screen 190, the controller 110 may give the user an impression that the thin cover 511 is lightly turned over. For example, the screen 190 may perform a display operation as if the sheet 522 of the second note 520 is turned over in a fluttering manner.

Referring to FIG. 5C, the mobile terminal 100 first displays the third note 530 having a large thickness and receives a user input for turning the cover 531 of the third note 530 through the screen 190. The mobile terminal 100 performs and displays an action of turning the cover 531 of the third note 530 on the screen 190. The cover 531 of the third note 530 is assumed to have a large thickness (of, for example, about 3 mm or more). When performing and displaying the action of turning the cover 531 of the third note 530 on the screen 190, the controller 110 may give the user an impression that the thick cover 531 is heavily turned over. For example, the screen 190 may perform a display operation as if the cover 531 of the third note 530 is heavily turned over, under control of the controller 110.

According to an embodiment of the present disclosure, the controller 110 may apply different times during which the first, second, and third covers 511, 521, and 531 of the first, second, and third notes 510, 520, and 530 are turned over or opened, for different thicknesses of the first, second, and third covers 511, 521, and 531. For example, the controller 110 may control the screen 190 to display the first, second, and third covers 511, 521, and 531 of the first, second, and third notes 510, 520, and 530, such that 0.5 second is taken to open the cover 511 of the first note 510, 1 second is taken to open the cover 521 of the second note 520, and 1.5 seconds are taken to open the cover 531 of the third note 530. According to an embodiment of the present disclosure, the controller 110 may apply different actions of turning the first, second, and third covers 511, 521, and 531 for different types of the first, second, and third covers 511, 521, and 531. For example, suppose that the cover 511 of the first note 510 is a soft cover, the cover 521 of the second note 520 is a hard cover, and the cover 531 of the third note 530 is a leather cover. The controller 110 may control the screen 190 or the screen controller 195 to display the texture of each of the first, second, and third covers 511, 521, and 531. The controller 110 may also control the screen 190 or the screen controller 195 to display the actions of turning the first, second, and third covers 511, 521, and 531 differently depending on the textures of the first, second, and third covers 511, 521, and 531.

Although the actions of turning the first, second, and third covers 511, 521, and 531 or the sheet 522 of the first, second, and third notes 510, 520, and 530 are executed and displayed based on a user input in FIGS. 5A, 5B, and 5C, according to another embodiment, the mobile terminal 100 may also execute and display the actions of turning the first, second, and third covers 511, 521, and 531 of the first, second, and third notes 510, 520, and 530 or the sheet 522, upon elapse of a reference time. For example, if 30 seconds have passed after execution of the note function, the controller 110 may control the mobile terminal 100 to turn the first, second, and third covers 511, 521, and 531 of the first, second, and third notes 510, 520, and 530 or the sheet 522, even when a user input is not inputted.

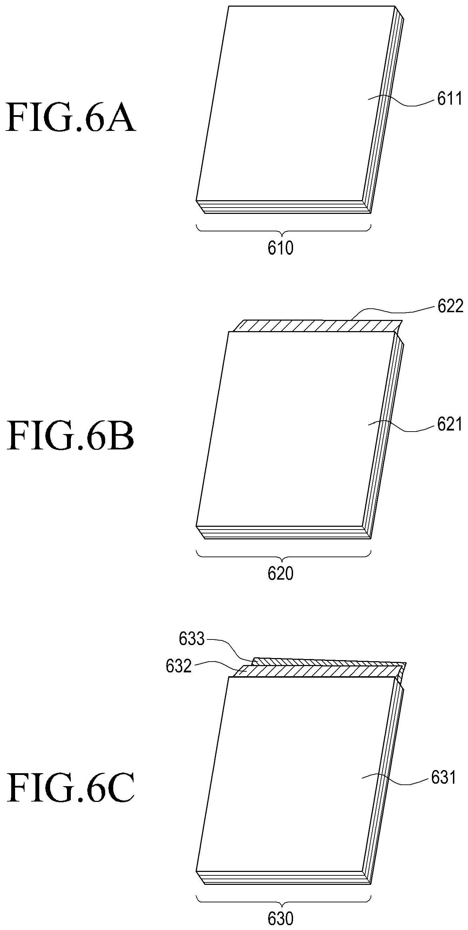

FIGS. 6A, 6B, and 6C illustrate a mobile terminal executing a note function according to an embodiment of the present disclosure. FIGS. 6A, 6B, and 6C show notes displayed differently based on how much the user has used the note function of the mobile terminal 100.

Referring to FIG. 6A, a first note 610 is a newly created note. Upon execution of the note function, the user determines whether to create a new note. If a user input for creating a new note is input, the controller 110 controls the screen 190 to display the newly created note, that is, the first note 610 as illustrated in FIG. 6A. As illustrated in FIG. 6A, the first note 610 may be implemented to include a cover 611 and may be displayed on the screen 190. According to an embodiment of the present disclosure, the mobile terminal 100 may add a sheet to the first note 610 based on a user input, and the added sheet may also be included in the first note 610.

Referring to FIG. 6B, a second note 620 is a note whose one sheet 622 has already been used by the user. Upon execution of the note function, the user determines whether to display a previously used note on the screen 190. Upon inputting of a user input for displaying the previously used note on the screen 190, the controller 110 controls the screen 190 to display the previously used note, that is, a second note 620 as illustrated in FIG. 6B. In FIG. 6B, it is assumed that a user input for displaying the second note 620 whose sheet 622 has already been used on the screen 190 is input. Thus, the second note 620 may be implemented to include a cover 621 and the sheet 622 and may be displayed on the screen 190. According to an embodiment of the present disclosure, the mobile terminal 100 may add at least one sheet to the second note 620 based on a user input, and the added sheet may also be included in the second note 620.

Referring to FIG. 6C, a third note 630 is a note whose two sheets 632 and 633 have already been used by the user. Upon execution of the note function, the user determines whether to display a previously used note on the screen 190. If a user input for displaying the previously used note on the screen 190 is input, the controller 110 may control the screen 190 to display the previously used note, that is, the third note 630 as illustrated in FIG. 6C. Like in FIG. 6B, also in FIG. 6C, it is assumed that a user input for displaying the third note 630 whose two sheets 622 and 623 have already been used by the user on the screen 190 is input. Thus, the third note 630 may be implemented to include a cover 631 and the two sheets 632 and 633 and may be displayed on the screen 190. According to an embodiment of the present disclosure, the mobile terminal 100 may add at least one sheet to the third note 630 based on a user input, and the added sheet may also be included in the third note 630.

While parts of the sheets 622, 632, and 633 of the notes 620 and 630 are shown on upper ends of the notes 620 and 630 in FIGS. 6B and 6C, according to another embodiment, the parts of the sheets 622, 632, and 633 may also be shown in left, right, or lower portions of the notes 620 and 630.

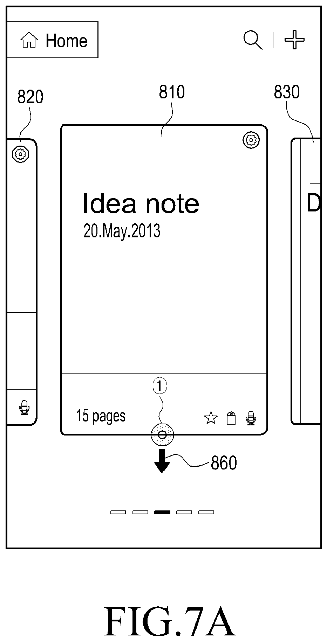

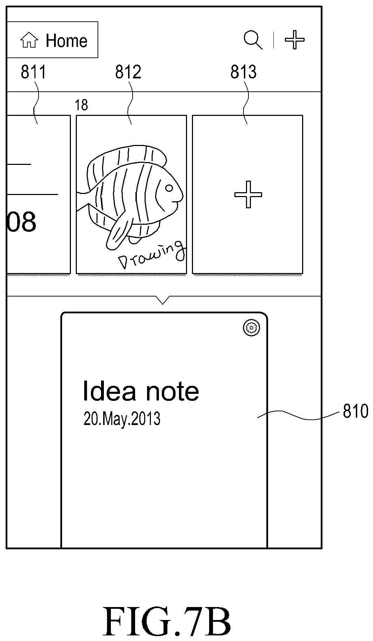

FIGS. 7A and 7B illustrate a mobile terminal executing a note function according to an embodiment of the present disclosure. FIG. 7A illustrates an execution screen appearing on the screen 190 immediately after the note function is executed by the mobile terminal 100, and FIG. 7B illustrates an execution screen appearing after one of multiple notes is selected by the user.

Referring to FIG. 7A, upon execution of the note function, at least one notes stored in advance by the user are displayed on the screen 190. It is assumed that three first through third notes 810, 820, and 830 are stored in advance. The mobile terminal 100 receives a user input for selecting a note from the user. The user is assumed to select the first note 810. To select the first note 810, the user touches and then dragging down at least a part or a lower portion of the first note 810 in the direction of an arrow 860, thus inputting a user input (1) for selecting the first note 810 to the mobile terminal 100. Although not shown in FIG. 7A, the first note 810 may be displayed on the screen 190 in the form of being dragged down based on the user input (1).

FIG. 7B illustrates a state after one of the first, second, and third notes 810, 820, and 830 illustrated in FIG. 7A is selected.

Referring to FIG. 7B, once a particular note, for example, the first note 810 here, is selected, the first note 810 is positioned in a lower portion of the screen 190. Above the selected note 810, sheets included in the note 810 may be sequentially arranged. In FIG. 7B, sheets 811 and 812 included in the first note 810 are displayed above the first note 810 selected by the user. An additional page 813 for adding a new sheet may be provided after the last sheet of the note 810. Thus, the user may add a sheet to the first note 100 by inputting a user input for selecting the additional page 813 to the mobile terminal 100.

The execution screens illustrated in FIGS. 7A and 7B may be consecutively displayed on the screen 190. For example, upon inputting of the user input for executing the note function from the user, the mobile terminal 100 displays the execution screen on which the first note 810, the second note 820, and the third note 830 are arranged as illustrated in FIG. 7A. The user selects one point on the screen 190, and in this state, slides the screen 190 to the left or right, thus situating one of the first, second, and third notes 810, 820, and 830 in the center of the screen 190. The user may also select and drags down one point included in one of the first, second, and third notes 810, 820, and 830, thus selecting a corresponding note and at the same time, displaying sheets included in the selected note on the screen 190. In FIGS. 7A and 7B, the first note 810 is selected by the user input and the user drags down the first note 810 to the lower portion of the screen 190, thus inputting the user input (1) for selecting the first note 810 to the mobile terminal 100. The mobile terminal 100 situates the first note 810 in the lower portion of the screen 190 in real time based on the user input (1), and also displays the sheets 811 and 812 included in the first note 810 and the additional page 813 above the first note 810, allowing the user to intuitively recognize the sheets 811 and 812 included in the first note 810.

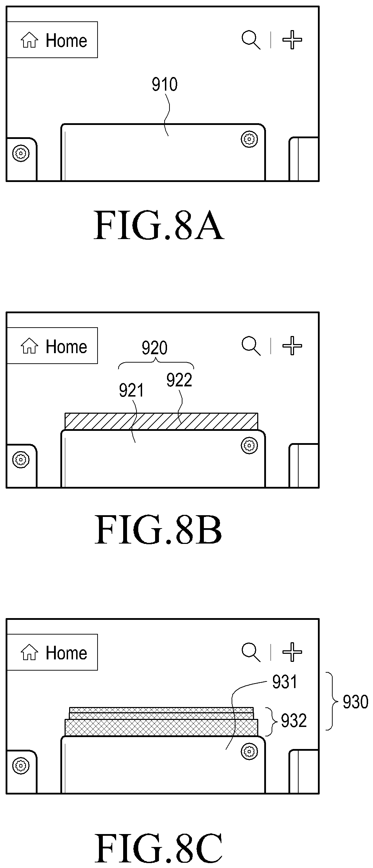

FIGS. 8A, 8B, and 8C illustrate a mobile terminal executing a note function according to an embodiment of the present disclosure.

Referring to FIGS. 8A, 8B, and 8C, first, second, and third notes 910, 920, and 930 are displayed differently depending on the number of sheets included in each of the first, second, and third notes 910, 920, and 930. In FIG. 8A, the first note 910 does not include any sheet and the first note 910 is displayed. In FIG. 8B, the second note 920 includes one sheet 922 and a part of the sheet 922 is displayed on an upper portion of a cover 921. In FIG. 8C, the third note 930 includes two sheets 932, and like in the second note 920 of FIG. 8B, parts of the sheets 932 are displayed on an upper portion of a cover 931. On an execution screen on which the note function is executed, the mobile terminal 100 may implement and display the number of sheets included in each of the first, second, and third notes 910, 920, and 930 as illustrated in FIGS. 8A, 8B, and 8C. Hence, the user executing the note function may intuitively recognize the number of sheets included in each of the first, second, and third notes 910, 920, and 930.

Although the two sheets 932 are included in the third note 930 in FIG. 8C, three or more sheets may be displayed overlappingly like the sheets 932 illustrated in FIG. 8C, and sheets more than a set number of sheets may not be displayed. For example, suppose that the number of sheets included in a note is 10. Thereafter, the controller 110 may overlappingly display some of the sheets, for example, three sheets, on an upper portion of the note, and display a number '10' in a left or right portion of the upper portion of the note, thus indicating that a total of 10 sheets are included in the note.

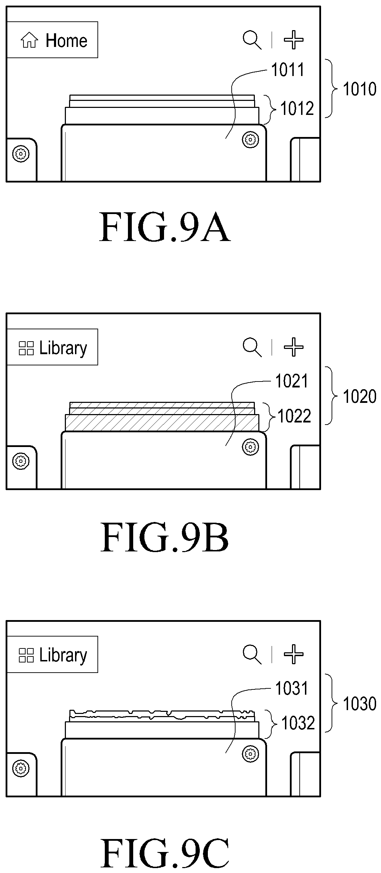

FIGS. 9A, 9B, and 9C illustrate a mobile terminal executing a note function according to an embodiment of the present disclosure.

In FIGS. 9A, 9B, and 9C, the user may be given an impression that sheets 1012, 1022, and 1032 included in first, second, and third notes 1010, 1020, and 1030, respectively, are aged overtime.

Referring to FIGS. 9A, 9B, and 9C, the controller 110 display the sheets 1012, 1022, and 1032 as being more discolored or worn out as they were created a longer time ago. In FIGS. 9A, 9B, and 9C, the third note 1030, the second note 1020, and the first note 1010 are sequentially created in that order and are stored in the mobile terminal 100.

In FIG. 9A, the first note 1010 is a newly created note, or a first reference time (for example, 7 days) has not yet been passed since the first note 1010 was created. Thus, the sheets 1012 of the first note 101 are displayed as being neither discolored nor worn out on the screen 190.

In FIG. 9B, the first reference time (for example, 7 days) has passed, but a second reference time (for example, 30 days) has not yet been passed, since the second note 1020 was created. Thus, the sheets 1022 of the second note 1020 are displayed as being discolored on the screen 190 in comparison to the sheets 1012 of the first note 1010.

In FIG. 9C, the second reference time (for example, 30 days) has passed since the third note 1030 was created. Thus, the sheets 1032 of the third note 1030 are displayed as much discolored and worn out on the screen 190 in comparison to the sheets 1012 and 1022 of the first and second notes 1010 and 1020.

Referring to FIGS. 9A, 9B, and 9C, covers 1011, 1021, and 1031 of the first, second, and third notes 1010, 1020, and 1030 may maintain their original states of being created, irrespective of time. According to another embodiment of the present disclosure, the covers 1011, 1021, and 1031 of the first, second, and third notes 1010, 1020, and 1030 may also be transformed overtime.

According to an embodiment of the present disclosure, the first reference time and the second reference time may be set by the controller 110. The first reference time and the second reference time may be determined by a user input inputted through the input/output module 160 or the screen 190. According to another embodiment, sheets of a note may be displayed differently depending on a third reference time, a fourth reference time, ..., and an Nth reference time (N is a natural number), as well as the first and second reference times, over time.

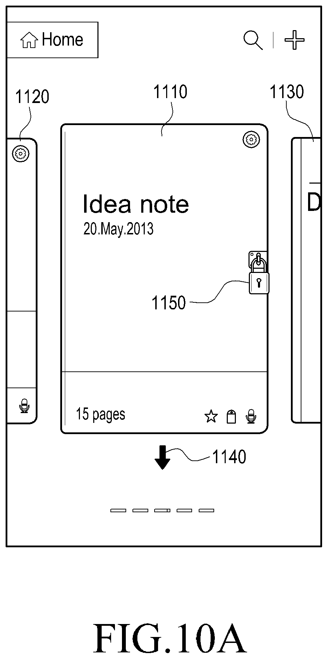

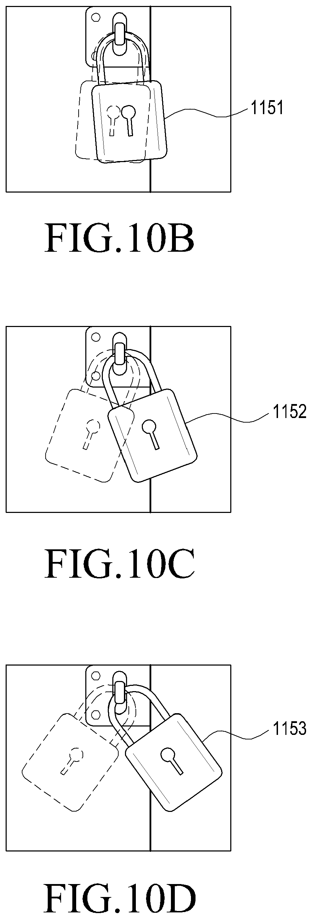

FIGS. 10A, 10B, 10C, and 10D illustrate a mobile terminal executing a note function according to an embodiment of the present disclosure. FIG. 10A illustrates an execution screen on which a security-reinforced note is executed, and FIGS. 10B, 10C, and 10D illustrate a lock as an example indicating a security level of the note.

Referring to FIG. 10A, a first note 1110, a second note 1120, and a third note 1130 are displayed on the screen 190 as an execution screen on which the note function is executed. The first note 1110 is selected by the user from among the first, second, and third notes 1110, 1120, and 1130. The user selects and drags down a point on the first note 1110 or a point in a lower portion of the first note 1110 in the direction of an arrow 1140, and the controller 110 receives such a user's action as a user input for selecting the first note 1110 on the screen 190.

Suppose that the first note 1110 has a high security level. A note having a high security level may be implemented as being locked by a lock 1150 as illustrated in FIG. 10A.

Referring to FIGS. 10B, 10C, and 10D, first, second, and third locks 1151, 1152, and 1153 are implemented to have different gradients for different security levels. For example, the first lock 1151 may have a low security level, the second lock 1152 may have an intermediate security level, and the third lock 1153 may have a high security level. According to another embodiment of the present disclosure, the first lock 1151 may have a high security level, the second lock 1152 may have an intermediate security level, and the third lock 1153 may have a low security level. However, it is noted that the illustration of the security level is not limited to an icon of a lock and icons of different forms, shapes, and colors may be used.

The security level of the lock 1150 may be determined depending on an input form or length of a password for executing the first note 1110. For example, if the input form of the password includes numbers, the controller 110 determines that a security level is low, and if the input form of the password is a combination of numbers and characters, the controller 110 determines that a security level is high. If the input form of the password is a pattern drawn by the user, a security level of the pattern may be higher than that of a number password. The controller 110 determines a higher security level for a longer number password or a longer number-character password. Similarly, for a more complex pattern, a higher security level may be determined.

The controller 110 may control the screen 190 to display contents, for example, sheets, included in the first note 1110 when a password is input by the user. According to an embodiment of the present disclosure, if the first note 1110 locked by the lock 1150 is selected by the user, the controller 110 may control the screen 190 to display an input window for receiving a password above the first note 1110 or separately from the first note 1110. If a correct password is input from the user, the controller 110 controls the screen 190 to display an execution screen on which the lock 1150 of the first note 1110 is opened.

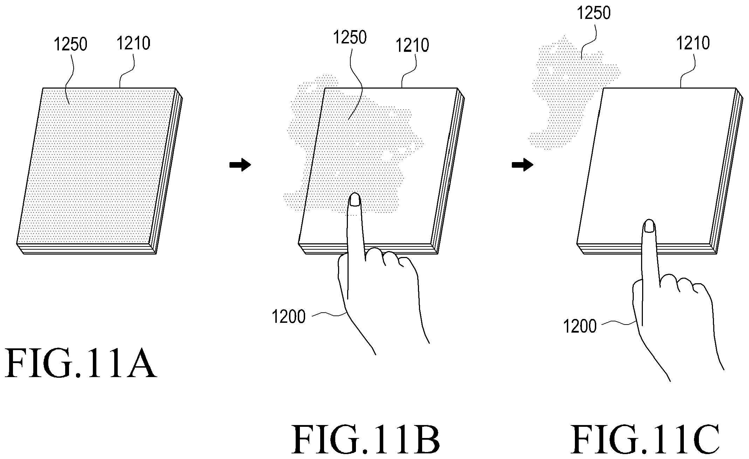

FIGS. 11A, 11B, and 11C illustrate a mobile terminal executing a note function according to an embodiment of the present disclosure.

Referring to FIGS. 11A, 11B, and 11C, if a note 1210 has not been updated for a reference time (for example, 30 days) or more, the controller 110 controls the screen 190 to display the note 1210 as having dust 1250 or a stain (not illustrated) on the surface thereof as illustrated in FIG. 11A. The reference time may be a set value or may be input from a user 1200 through the input/output module 160 or the screen 190. However, it is noted that other types of icons, notifications, and the like, may be used to indicate the reference time.

According to an embodiment of the present disclosure, the controller 110 controls the screen 190 to display the note 1210 after adjusting the density of the dust 1250 on the surface of the note 1210 based on a non-update time. For example, if the note 1210 has not been updated for 0 - 7 days, the controller 110 may control the screen 190 to display the note 1210 as having no dust 1250 on the surface thereof. If the note 1210 has not been updated for 8 - 14 days, the controller 110 may control the screen 190 to display the note 1210 as having the dust 1250 in a region corresponding to 1/3 of the surface of the note 1210. If the note 1210 has not been updated for 15 - 21 days, the controller 110 may control the screen 190 to display the note 1210 as having the dust 1250 in a region corresponding to 2/3 of the surface of the note 1210. If the note 1210 has not been updated for 22 days or more, the controller 110 may control the screen 190 to display the note 1210 as having the dust 1250 on the entire surface of the note 1210 as illustrated in FIG. 11A.

Once the note 1210 having the dust 1250 because of not being updated as illustrated in FIG. 11A is selected by the user 1200, the dust 1250 may be stirred up and removed from the surface of the note 1210 as illustrated in FIGS. 11A and 11B. As illustrated in FIG. 11B, upon selection of the note 1210 by the user 1200, the controller 110 may control the screen 190 to display an image showing that the dust 1250 on the surface of the note 1210 flies and disappears from the surface of the note 1210. FIG. 11B shows an execution screen immediately after a user input for selecting the note 1210 is input by the user 1200, in which the user 1200 touches the surface of the note 1210 displayed on the screen 190. FIG. 11C shows an execution screen immediately after the user input illustrated in FIG. 11B is input, on which the dust 1250 is removed from the surface of the note 1210.

As such, the mobile terminal 100 may visually indicate to the user 1200 that the note 1210 is updated or is not updated by displaying the dust 1250 piled on the surface of the note 1210.

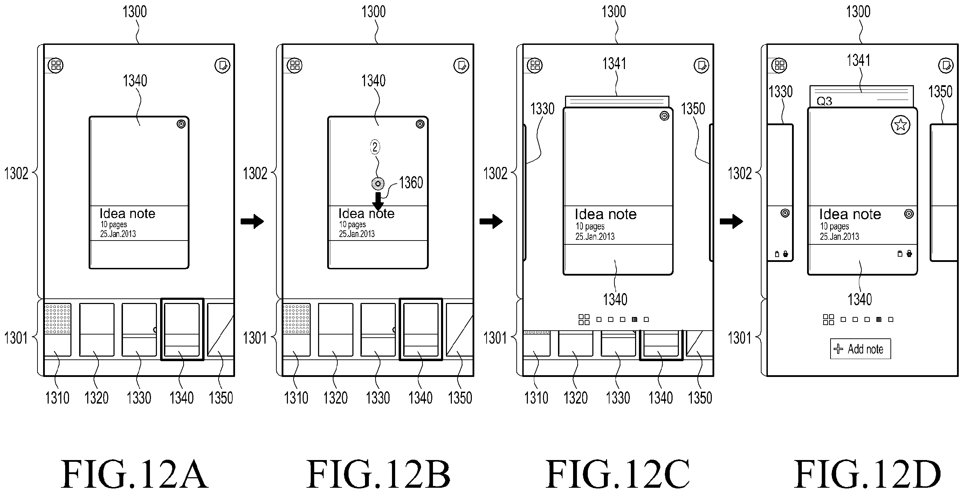

FIGS. 12A, 12B, 12C, and 12D illustrate a mobile terminal executing a note function according to an embodiment of the present disclosure.

FIGS. 12A, 12B, 12C, and 12D show execution screens 1300 when one of multiple notes 1310, 1320, 1330, 1340, and 1350 is selected during execution of the note function of the mobile terminal 100.

Referring to FIG. 12A, the controller 110 controls the screen 190 to display a first note 1310, a second note 1320, a third note 1330, a fourth note 1340, and a fifth note 1350 in a lower portion, that is, a first region 1301, of an execution screen 1300 on which the note function is executed. The controller 110 controls the screen 190 to display a note primarily selected by the user from among the first, second, third, fourth, and fifth notes 1310, 1320, 1330, 1340, and 1350 displayed on the first region 1301 in an upper portion, that is, a second region 1302, of the execution screen 1300. In FIG. 12A, the fourth note 1340 is primarily selected by the user from among the first, second, third, fourth, and fifth notes 1310, 1320, 1330, 1340, and 1350, such that the fourth note 1340 is displayed enlarged in the second region 1302 in FIGS. 12A and 12B.

Referring to FIG. 12B, the mobile terminal 100 receives a user input (2) for receiving another selection of the fourth note 1340 from the user. The user input (2) is assumed to be input by the user touching a point on the fourth note 1340 displayed in the second region 1302 and dragging down the point in the direction of an arrow 1360 as illustrated in FIG. 12B.

Referring to FIG. 12C, upon inputting of the user input (2) as illustrated in FIG. 12B, the second region 1302 is enlarged and at the same time the fourth note 1340 is also enlarged. The lower portion, that is, the first region 1301, of the execution screen 1300 and the first, second, third, fourth, and fifth notes 1310, 1320, 1330, 1340, and 1350 included in the first region 1301 may be partially hidden by the second region 1302. According to an embodiment of the present disclosure, the user may adjust the size of the second region 1302 in real time based on the user input (2) of dragging in the direction of the arrow 1360. The size of the second region 1302 and the size of the fourth note 1340 included in the second region 1302 increase as the user drags the execution screen 1300 in the direction of the arrow 1360, and decrease as the user drags the execution screen 1300 in a direction opposite to the arrow 1360.

Referring to FIG. 12D, it illustrates a result of the user dragging the execution screen 1300 in the direction of the arrow 1360 until the second region 1302 entirely covers the first region 1301, as the user input (2) illustrated in FIG. 12B. If the first region 1301 disappears from the execution screen 1300 as illustrated in FIG. 12D, the controller 110 regards the fourth note 1340 as being finally selected by the user. Thus, the controller 110 displays sheets 1341 included in the fourth note 1340 on an upper portion of the fourth note 1340.

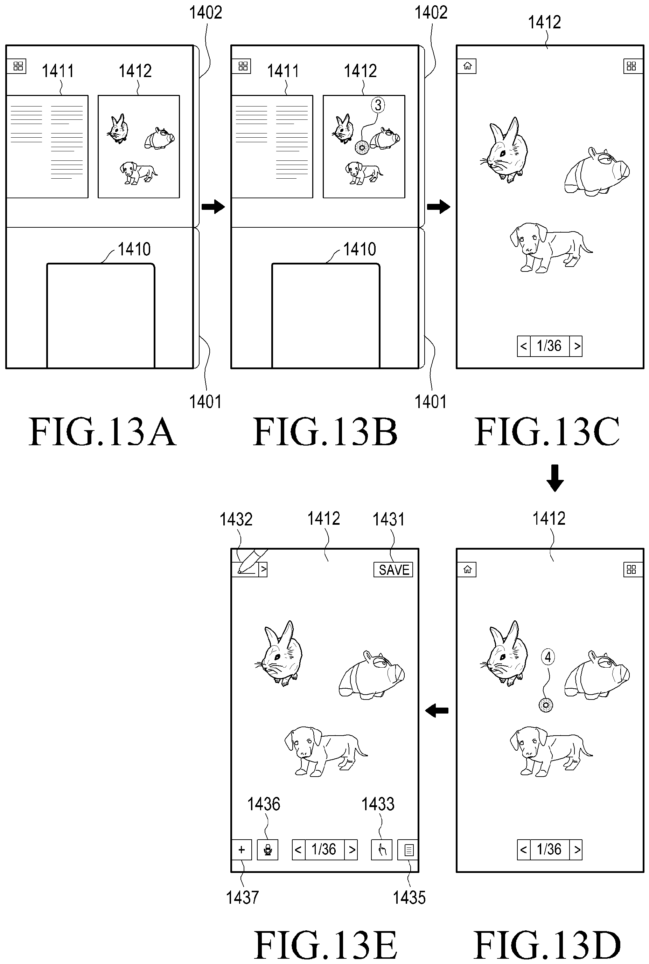

FIGS. 13A, 13B, 13C, 13D, and 13E illustrate a mobile terminal executing a note function according to an embodiment of the present disclosure.

FIGS. 13A, 13B, 13C, 13D, and 13E show execution screens on which the note function is executed to modify a sheet included in at least one note.

Referring to FIG. 13A, the execution screen displayed on the screen 190 is divided into a first region 1401 and a second region 1402. The first region 1401 includes a note 1410 selected by the user and the second region 1402 includes first and second sheets 1411 and 1412 included in the selected note 1410. In FIG. 13A, the first sheet 1411 and the second sheet 1412 included in the note 1410 are shown.

Referring to FIG. 13B, the mobile terminal 100 receives a user input (3) for selecting the second sheet 1412 from the user. The user may touch a point on the second sheet 1412 to select the second sheet 1412 on the execution screen displayed on the screen 190. Upon selection of the second sheet 1412 as in FIG. 13B, the controller 110 controls the screen 190 to display the second sheet 1412 over the entire screen 190.

Referring to FIG. 13C, the second sheet 1412 is displayed as the execution screen over the entire screen 190. Afterwards, the user inputs a user input (4) for modifying the second sheet 1412 to the mobile terminal 100.

Referring to FIGS. 13D and 13E, the mobile terminal 100 receives the user input (4) requesting modification of the second sheet 1412 from the user, in which the user input (4) is inputted by the user touching a point on the second sheet 1412 displayed over the entire screen 190. Upon inputting of the user input (4), the controller 110 displays various tools 1431, 1432, 1433, 1435, 1436, and 1437 for modifying the second sheet 1412 on the second sheet 1412, as illustrated in FIG. 13E.

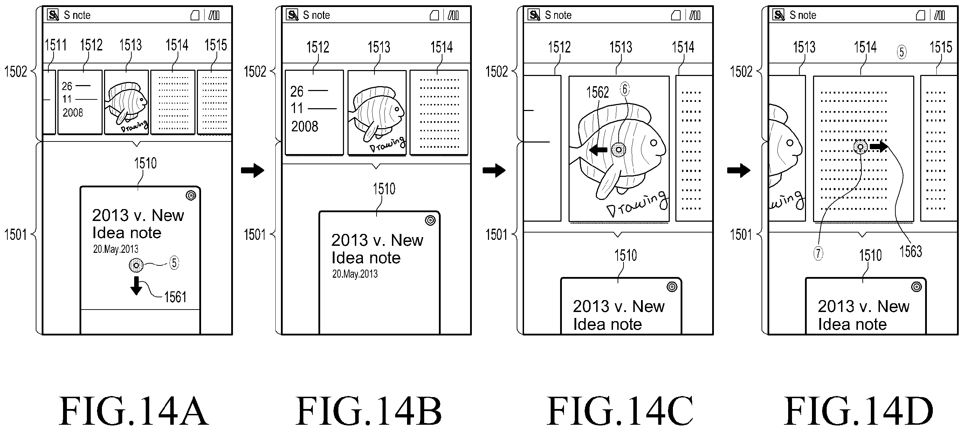

FIGS. 14A, 14B, 14C, and 14D illustrate a mobile terminal executing a note function according to an embodiment of the present disclosure.

FIGS. 14A, 14B, 14C, and 14D show execution screens for executing the note function on which sheets included in at least one note are displayed. Referring to FIG. 14A, the execution screen is divided into a first region 1501 and a second region 1502. The first region 1501 includes a note 1510 selected by the user, and the second region 1502 includes first, second, third, fourth, and fifth sheets 1511, 1512, 1513, 1514, and 1515 included in the selected note 1510. FIG. 14A shows the first sheet 1511, the second sheet 1512, the third sheet 1513, the fourth sheet 1514, and the fifth sheet 1515 included in the note 1510.

Referring to FIGS. 14A, 14B, 14C, and 14D, the mobile terminal 100 receives a user input for increasing the size of the second region 1502 from the user. For example, the user may input a user input (5) to the mobile terminal 100 by touching and then dragging down a point on the first region 1501 or a point on the note 1510 in the direction of an arrow 1561. Based on the user input (5), the controller 110 increases the size of the second region 1502 and reduces the size of the first region 1501 on a real time basis. The controller 110 may increase or reduce the size of the first region 1501 and the size of the second region 1502 until inputting of the user input (5) ends. The user input (5) may end when the user does not select the point on the first region 1502 any longer. For example, the user may start inputting the user input (5) by touching a point on the first region 1501 with a finger (or an input unit, such as a stylus pen) and may finish inputting the user input (5) by removing the finger (or the input unit) from the point. The user may increase or reduce the size of the first region 1501 and the size of the second region 1502 by selecting a point and in this state, dragging the execution screen up or down as desired by the user. FIGS. 14A, 14B, and 14C shows that the size of the first region 1501 is reduced and the size of the second region 1502 is increased based on the user input (5). In this case, the sheets 1511, 1512, 1513, 1514, and 1515 arranged in line may be displayed enlarged in proportional to the enlargement of the second region 1502.

Referring to FIGS. 14A, 14B, and 14C, it can be seen that the sizes of the arranged sheets 1511, 1512, 1513, 1514, and 1515 are increased as the size of the second region 1502 is increased.

The mobile terminal 100 may then receive a user input (6) for selecting one of the sheets 1511, 1512, 1513, 1514, and 1515 included in the note 1510. In FIG. 14C, the mobile terminal 100 receives the user input (6) for selecting a point on the third sheet 1513. The user may input the user input (6) by selecting and then dragging the point on the third sheet 1513 in the direction of an arrow 1562, that is, from the right to the left, thus scrolling the sheets 1511, 1512, 1513, 514, and 1515 arranged in line. FIG. 14D shows the execution screen on which the third sheet 1513 located in the center of the second region 1502 is moved to the left and the fourth sheet 1514 is located in the center of the second region 1502, based on the user input (6). The user may input a user input (7) by selecting and then dragging the point on the fourth sheet 1514 located in the center of the second region 1502 to the right in the direction of an arrow 1563 and situating the third sheet 1513 in the center of the second region 1502. As such, by executing the note function according to the current embodiment, the sizes of the sheets 1511, 1512, 1513, 1514, and 1515 included in the note 1510 are increased or reduced as desired by the user, and the sheets 1511, 1512, 1513, 1514, and 1515 arranged in line may be scrolled from the left to the right or from the right to the left based on the user input (6) or (7). Hence, the user may conveniently select a desired sheet.

Although the sheets 1511, 1512, 1513, 1514, and 1515 arranged horizontally are scrolled from the left to the right or from the right to the left in the current embodiment, they may also be arranged vertically according to another embodiment of the present disclosure. When the sheets 1511, 1512, 1513, 1514, and 1515 are arranged vertically, the mobile terminal 100 may receive a user input for scrolling the sheets 1511, 1512, 1513, 1514, and 1515 up or down.

Certain aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include a ROM, a RAM, Compact Disc (CD)-ROMs, magnetic tapes, floppy disks, and optical data storage devices. The non-transitory computer readable recording medium can also be distributed over network coupled computer systems so that the computer readable code is stored and executed in a distributed fashion. In addition, functional programs, code, and code segments for accomplishing the present disclosure can be easily construed by programmers skilled in the art to which the present disclosure pertains.

At this point it should be noted that the various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include a ROM, a RAM, CD-ROMs, magnetic tapes, floppy disks, and optical data storage devices. The processor readable mediums can also be distributed over network coupled computer systems so that the instructions are stored and executed in a distributed fashion. In addition, functional computer programs, instructions, and instruction segments for accomplishing the present disclosure can be easily construed by programmers skilled in the art to which the present disclosure pertains.

The mobile terminal may receive and store the program from a program providing device connected in a wired or wireless manner. The program providing device may include a memory for storing a program including instructions for instructing the mobile terminal to execute the claimed method for controlling the mobile terminal, information needed for the method for controlling the mobile terminal, a communication unit for performing wired or wireless communication with the mobile terminal, and a controller for transmitting a corresponding program to the mobile terminal at the request of the mobile terminal or automatically.

According to embodiments of the present disclosure, a mobile terminal and a method for controlling the mobile terminal are provided which allows a user to conveniently execute a note function by providing execution screens having various designs and operations based on a user's preference.

Other effects that may be obtained or expected from the embodiments of the present disclosure are explicitly or implicitly disclosed in the detailed description of the present disclosure. For example, various effects expected from the embodiment of the present disclosure have been disclosed in the detailed description of the present disclosure.

While the present disclosure has been shown and described with reference to various embodiments thereof, it will be understood by those skilled in the art that various changes in form and detail may be made therein without departing from the scope of the present disclosure as defined by the appended claims.

## Claims

1. A method for controlling a mobile terminal (100), the method comprising:
displaying (S414) one or more notes based on one or more attributes corresponding to the one or more notes, respectively, upon execution of a note function, wherein at least one note of the one or more notes includes at least one sheet, and the one or more notes are displayed differently depending on the number of sheets included in each of the one or more notes;
determining (S416) whether a user input for selecting one from among the one or more notes has been received;
if the user input has been received, moving the selected note corresponding to the user input, wherein the user input is a touch input for selecting and dragging the selected note; and
displaying (S418) the selected note on a first region of a screen (190) of the mobile terminal (100) and the at least one sheet included in the selected note on a second region of the screen (190), such that data recorded in each of the sheets included in the selected note is displayed along with the selected note.

2. The method of claim 1, wherein displaying the one or more notes comprises:
arranging and displaying the one or more notes in line horizontally, based on the attributes for the each of the one or more notes.

3. The method of claim 2, wherein arranging and displaying the one or more notes in line horizontally comprises:
receiving a user input for horizontal scrolling; and
moving from left to right or from right to left and displaying the one or more notes based on the attributes of each of the one or more notes and an arranging order of the one or more notes.

4. The method of claim 1, wherein displaying the one or more notes comprises:
arranging and displaying the one or more notes in line vertically, based on the attributes of each of the one or more notes.

5. The method of claim 4, wherein arranging and displaying the one or more notes in line vertically comprises:
receiving a user input for vertical scrolling; and
moving from top to bottom or from bottom to top and displaying the one or more notes based on the attributes for each of the one or more notes and an arranging order of the notes.

6. The method of claim 1, wherein displaying the one or more notes comprises:
differently displaying each of the one or more notes depending on a time having elapsed from creation for each of the one or more notes.

7. The method of claim 1, wherein displaying the one or more notes comprises:
differently displaying each of the one or more notes depending on an attribute of the cover included in each the one or more notes.

8. The method of claim 1, wherein displaying the one or more notes comprises:
differently displaying the covers included in each of the one or more notes depending on a security level for each of the one or more notes.

9. The method of claim 8, wherein differently displaying the covers comprises:
differently displaying each of the one or more notes by applying different degrees of transformation to objects comprised in each of the one or more notes depending on the security level for each of the one or more notes, upon inputting of the user input with respect to one from among the one or more notes.

10. The method of claim 1, wherein the user input is a touch input for selecting and dragging the selected note from top to bottom.

11. The method of claim 1, wherein moving the selected note comprises moving the selected note from top to bottom.

12. The method of claim 1, wherein displaying the one or more notes comprises:
horizontally arranging and displaying the one or more notes.

13. The method of claim 1, wherein displaying the at least one sheet comprises:
differently displaying the one or more sheets depending on a time having elapsed after creation for each of the one or more sheets.

14. The method of claim 1, wherein the selected note is differently displayed based on a time for opening a cover of the selected note differing according to a material of the cover of the selected note or the
number of sheets comprised in the selected note.

15. A mobile terminal (100), comprising:
a touch screen (190); and
a controller (110) configured to:
control the touch screen to display (S414) one or more notes based on one or more attributes corresponding to the one or more notes, respectively, upon execution of a note function, wherein at least one note of the one or more notes includes at least one sheet, and the one or more notes are displayed differently depending on the number of
sheets included in each of the one or more notes;
determine (S416) whether a user input for selecting one from among the one or more notes has been received,
if the user input has been received, move the selected note corresponding to the user input, wherein the user input is a touch input for selecting and dragging the selected note, and
control the touch screen (190) to display (S418) the selected note on a first region of the touch screen (190) and the at least one sheet included in the selected note on a second region of the touch screen (190), such that data recorded in each of the sheets included in the selected note is displayed along with the selected note.

## Patentansprüche

1. Verfahren zum Steuern eines mobilen Endgeräts (100), wobei das Verfahren Folgendes umfasst:
Anzeigen (S414) einer oder mehrerer Notizen basierend auf einem oder mehreren Attributen, die der einen bzw. der mehreren Notizen entsprechen, bei dem Ausführen einer Notizfunktion, wobei mindestens eine Notiz der einen oder der mehreren Notizen mindestens ein Blatt enthält, und die eine oder die mehreren Notizen unterschiedlich angezeigt werden, abhängig von der Anzahl der Blätter, die in jeder der einen oder der mehreren Notizen enthalten sind;
Bestimmen (S416), ob eine Benutzereingabe zum Auswählen einer aus der einen oder den mehreren Notizen empfangen wurde;
wenn die Benutzereingabe empfangen wurde, Bewegen der ausgewählten Notiz entsprechend der Benutzereingabe, wobei die Benutzereingabe eine Berührungseingabe zum Auswählen und Ziehen der ausgewählten Notiz ist; und
Anzeigen (S418) der ausgewählten Notiz auf einem ersten Bereich eines Bildschirms (190) des mobilen Endgeräts (100) und des mindestens einen Blattes, das in der ausgewählten Notiz enthalten ist, auf einem zweiten Bereich des Bildschirms (190), so dass Daten, die in jedem der Blätter aufgezeichnet sind, die in der ausgewählten Notiz enthalten sind, zusammen mit der ausgewählten Notiz angezeigt werden.

2. Verfahren nach Anspruch 1, wobei das Anzeigen der einen oder der mehreren Notizen Folgendes umfasst:
Anordnen und Anzeigen der einen oder der mehreren Notizen in horizontaler Linie, basierend auf den Attributen für jede der einen oder der mehreren Notizen.

3. Verfahren nach Anspruch 2, wobei das Anordnen und das Anzeigen der einen oder der mehreren Notizen in horizontaler Linie Folgendes umfasst:
Empfangen einer Benutzereingabe zum horizontalen Scrollen; und
Bewegen von links nach rechts oder von rechts nach links und Anzeigen der einen oder der mehreren Notizen basierend auf den Attributen jeder der einen oder der mehreren Notizen und einer Anordnungsreihenfolge der einen oder der mehreren Notizen.

4. Verfahren nach Anspruch 1, wobei das Anzeigen der einen oder der mehreren Notizen Folgendes umfasst:
Anordnen und Anzeigen der einen oder der mehreren Notizen in vertikaler Linie, basierend auf den Attributen jeder der einen oder der mehreren Notizen.

5. Verfahren nach Anspruch 4, wobei das Anordnen und das Anzeigen der einen oder der mehreren Notizen in vertikaler Linie Folgendes umfasst:
Empfangen einer Benutzereingabe zum vertikalen Scrollen; und
Bewegen von oben nach unten oder von unten nach oben und Anzeigen der einen oder der mehreren Notizen basierend auf den Attributen für jede der einen oder der mehreren Notizen und einer Anordnungsreihenfolge der Notizen.

6. Verfahren nach Anspruch 1, wobei das Anzeigen der einen oder der mehreren Notizen Folgendes umfasst:
unterschiedliches Anzeigen jeder der einen oder der mehreren Notizen abhängig von einer Zeit, die seit dem Erstellen für jede der einen oder der mehreren Notizen verstrichen ist.

7. Verfahren nach Anspruch 1, wobei das Anzeigen der einen oder der mehreren Notizen Folgendes umfasst:
unterschiedliches Anzeigen jeder der einen oder der mehreren Notizen, abhängig von einem Attribut der Abdeckung, die in jeder der einen oder der mehreren Notizen enthalten ist.

8. Verfahren nach Anspruch 1, wobei das Anzeigen der einen oder der mehreren Notizen Folgendes umfasst:
unterschiedliches Anzeigen der Abdeckungen, die in jeder der einen oder der mehreren Notizen enthalten sind, abhängig von einer Sicherheitsstufe für jede der einen oder der mehreren Notizen.

9. Verfahren nach Anspruch 8, wobei das unterschiedliche Anzeigen der Abdeckungen Folgendes umfasst:
unterschiedliches Anzeigen jeder der einen oder der mehreren Notizen durch Anwenden verschiedener Transformationsgrade auf Objekte, die in jeder der einen oder der mehreren Notizen enthalten sind, abhängig von der Sicherheitsstufe für jede der einen oder der mehreren Notizen, bei dem Eingeben der Benutzereingabe in Bezug auf eine aus der einen oder den mehreren Notizen.

10. Verfahren nach Anspruch 1, wobei die Benutzereingabe eine Berührungseingabe zum Auswählen und Ziehen der ausgewählten Notiz von oben nach unten ist.

11. Verfahren nach Anspruch 1, wobei das Bewegen der ausgewählten Notiz das Bewegen der ausgewählten Notiz von oben nach unten umfasst.

12. Verfahren nach Anspruch 1, wobei das Anzeigen der einen oder der mehreren Notizen Folgendes umfasst:
horizontales Anordnen und Anzeigen der einen oder der mehreren Notizen.

13. Verfahren nach Anspruch 1, wobei das Anzeigen des mindestens einen Blattes Folgendes umfasst:
unterschiedliches Anzeigen des einen oder der mehreren Blätter, abhängig von einer Zeit, die nach dem Erstellen für jedes des einen oder der mehreren Blätter verstrichen ist.

14. Verfahren nach Anspruch 1, wobei die ausgewählte Notiz unterschiedlich angezeigt wird, basierend auf einer Zeit zum Öffnen einer Abdeckung der ausgewählten Notiz, die sich entsprechend einem Material der Abdeckung der ausgewählten Notiz oder der Anzahl der Blätter, die in der ausgewählten Notiz enthalten sind, unterscheidet.

15. Mobiles Endgerät (100), welches Folgendes umfasst:
einen Touchscreen (190); und
eine Steuerung (110), die konfiguriert ist zum:
Steuern des Touchscreens zum Anzeigen (S414) einer oder mehrerer Notizen basierend auf einem oder mehreren Attributen, die der einen bzw. der mehreren Notizen entsprechen, bei dem Ausführen einer Notizfunktion, wobei mindestens eine Notiz der einen oder der mehreren Notizen mindestens ein Blatt enthält, und die eine oder die mehreren Notizen unterschiedlich angezeigt werden, abhängig von der Anzahl der Blätter, die in jeder der einen oder der mehreren Notizen enthalten sind;
Bestimmen (S416), ob eine Benutzereingabe zum Auswählen einer aus der einen oder den mehreren Notizen empfangen wurde,
wenn die Benutzereingabe empfangen wurde, Bewegen der ausgewählten Notiz entsprechend der Benutzereingabe, wobei die Benutzereingabe eine Berührungseingabe zum Auswählen und Ziehen der ausgewählten Notiz ist, und
Steuern des Touchscreens (190) zum Anzeigen (S418) der ausgewählten Notiz auf einem ersten Bereich des Touchscreens (190) und des mindestens einen Blattes, das in der ausgewählten Notiz enthalten ist, auf einem zweiten Bereich des Touchscreens (190), so dass Daten, die in jedem der Blätter aufgezeichnet sind, die in der ausgewählten Notiz enthalten sind, zusammen mit der ausgewählten Notiz angezeigt werden.

## Revendications

1. Procédé de commande d'un terminal mobile (100), le procédé comprenant :
afficher (S414) une ou plusieurs notes sur la base d'un ou de plusieurs attributs correspondant à l'une ou plusieurs notes, respectivement, lors de l'exécution d'une fonction de note, où au moins une note de l'une ou plusieurs notes comprend au moins une feuille, et l'une ou plusieurs notes sont affichées différemment selon le nombre de feuilles incluses dans chacune de l'une ou plusieurs notes ;
déterminer (S416) si une entrée d'utilisateur pour sélectionner une note parmi l'une ou plusieurs notes a été reçue ;
si l'entrée d'utilisateur a été reçue, déplacer la note sélectionnée correspondant à l'entrée d'utilisateur, où l'entrée d'utilisateur est une entrée tactile pour sélectionner et faire glisser la note sélectionnée ; et
afficher (S418) la note sélectionnée sur une première zone d'un écran (190) du terminal mobile (100) et l'au moins une feuille incluse dans la note sélectionnée sur une deuxième zone de l'écran (190), de sorte que les données enregistrées dans chacune des feuilles incluses dans la note sélectionnée s'affichent avec la note sélectionnée.

2. Procédé selon la revendication 1, où l'affichage de l'une ou plusieurs notes comprend :
organiser et afficher en alignement horizontal l'une ou plusieurs notes, en fonction des attributs de chacune de l'une ou plusieurs notes.

3. Procédé selon la revendication 2, où l'agencement et l'affichage d'une ou plusieurs notes en alignement horizontal comprennent :
recevoir une entrée d'utilisateur pour le défilement horizontal ; et
se déplacer de gauche à droite ou de droite à gauche et afficher l'une ou plusieurs notes sur la base des attributs de chacune des un ou plusieurs notes et d'un ordre d'agencement de l'une ou plusieurs notes.

4. Procédé selon la revendication 1, où l'affichage de l'une ou plusieurs notes comprend :
organiser et afficher l'une ou plusieurs notes en alignement vertical en fonction des attributs de chacune de l'une ou plusieurs notes.

5. Procédé selon la revendication 4, où l'agencement et l'affichage de l'une ou plusieurs notes en alignement vertical comprennent :
recevoir une entrée d'utilisateur pour le défilement vertical ; et
se déplacer de haut en bas ou de bas en haut et afficher l'une ou plusieurs notes en fonction des attributs de chacune de l'une ou plusieurs notes et d'un ordre de classement des notes.

6. Procédé selon la revendication 1, où l'affichage de l'une ou de plusieurs notes comprend :
afficher différemment chacune de l'une ou plusieurs notes en fonction du temps écoulé depuis la création de chacune de l'une ou plusieurs notes.

7. Procédé selon la revendication 1, où l'affichage de l'une ou plusieurs notes comprend :
afficher différemment chacune de l'une ou plusieurs notes en fonction d'un attribut de la couverture inclus dans chacune de l'une ou plusieurs notes.

8. Procédé selon la revendication 1, où l'affichage de l'une ou plusieurs notes comprend :
afficher différemment les couvertures incluses dans chacune de l'une ou plusieurs notes en fonction d'un niveau de sécurité pour chacune de l'une ou plusieurs notes.

9. Procédé selon la revendication 8, où l'affichage différent des couvertures comprend :
afficher différemment chacune de l'une ou plusieurs notes en appliquant différents degrés de transformation à des objets compris dans chacune de l'une ou plusieurs notes en fonction du niveau de sécurité pour chacune de l'une ou plusieurs notes, lors de la saisie de l'entrée d'utilisateur par rapport à une note parmi l'une ou plusieurs notes.

10. Procédé selon la revendication 1, où l'entrée d'utilisateur est une entrée tactile pour sélectionner et faire glisser la note sélectionnée de haut en bas.

11. Procédé selon la revendication 1, où le déplacement de la note sélectionnée comprend le déplacement de la note sélectionnée de haut en bas.

12. Procédé selon la revendication 1, où l'affichage de l'une ou de plusieurs notes comprend :
organiser et afficher en alignement horizontal l'une ou plusieurs notes.

13. Procédé selon la revendication 1, où l'affichage de l'au moins une feuille comprend :
afficher différemment l'une ou plusieurs feuilles en fonction du temps écoulé après la création de l'une ou plusieurs feuilles.

14. Procédé selon la revendication 1, où la note sélectionnée est affichée différemment sur la base d'un temps d'ouverture d'une couverture de la note sélectionnée qui diffère selon le matériau de la couverture de la note sélectionnée ou le nombre de feuilles comprises dans la note sélectionnée.

15. Terminal mobile (100), comprenant :
un écran tactile (190) ; et
un contrôleur (110) configuré pour :
commander l'écran tactile pour afficher (S414) une ou plusieurs notes en fonction d'un ou plusieurs attributs correspondant à l'une ou plusieurs notes, respectivement, lors de l'exécution d'une fonction de note, où au moins une note de l'une ou plusieurs notes comprend au moins une feuille, et l'une ou plusieurs notes s'affichent différemment en fonction du nombre de feuilles incluses dans chacune de l'une ou plusieurs notes ;
déterminer (S416) si une entrée d'utilisateur a été reçue pour sélectionner une note parmi l'une ou plusieurs notes,
si l'entrée d'utilisateur a été reçue, déplacer la note sélectionnée correspondant à l'entrée d'utilisateur, l'entrée d'utilisateur étant une entrée tactile pour sélectionner et faire glisser la note sélectionnée, et
commander l'écran tactile (190) pour afficher (S418) la note sélectionnée sur une première zone de l'écran tactile (190) et l'au moins une feuille incluse dans la note sélectionnée sur une deuxième zone de l'écran tactile (190), telle que les données enregistrées dans chacune des feuilles incluses dans la note sélectionnée s'affichent avec la note sélectionnée.
